# FASCICULE DE BREVET EUROPEEN

(11) **EP 1 032 525 B1**
(45) Date de publication et mention de la délivrance du brevet: **20.08.2003**
(21) Numéro de dépôt: 99946251.8
(22) Date de dépôt: 28.09.1999
(51) Int. Cl.: B62D 25/08, B62D 29/00

(54) **FACADE AVANT COMPOSITE METAL/PLASTIQUE RENFORCEE POUR VEHICULE AUTOMOBILE**
VORDERFRONT AUS VERSTÄRKTEM METALL- UND KUNSTSTOFFVERBUNDWERKSTOFF FÜR KRAFTFAHRZEUGE
REINFORCED METAL/PLASTIC COMPOSITE FRONT PANEL FOR MOTOR VEHICLE

(30) Priorité: 30.09.1998 FR 9812231
(43) Date de publication de la demande: 06.09.2000
(73) Titulaire: VALEO THERMIQUE MOTEUR, 78321 La Verrière (FR); VALEO VISION, 93000 Bobigny (FR)
(72) Inventeur: SIGONNEAU, Jacques, F-28170 Theuvy Achères (FR); CANTINEAU, Eric, F-75017 Paris (FR); GUYOMARD, Jean-Nicolas, F-27930 Le Mesnil Fuguet (FR)
(74) Mandataire: Rolland, Jean-Christophe
(86) Numéro de dépôt international: FR9902303
(87) Numéro de publication internationale: WO00018634

(56) Documents cités:
- EP-A- 0 493 158
- EP-A- 0 658 470
- FR-A- 2 761 331
- US-A- 5 658 041

## Description

La présente invention concerne une façade avant composite métal/plastique pour véhicule automobile.

Une telle façade est un élément de structure du véhicule susceptible d'intégrer divers équipements du véhicule tels que projecteurs, clignotants, avertisseur sonore, échangeur thermique, groupe moto-ventilateur ou module de refroidissement complet, etc.

La façade avant, ainsi pourvue de ces équipements, constitue un module unitaire préparé et livré par l'équipementier, prêt à être monté sur le véhicule par le constructeur.

Le montage de ce module se fait par raccordement à des éléments de structure latéraux du véhicule tels que longerons, ailes ou coque, puis mise en place d'un pare-chocs ou bouclier frontal rapporté sur le module.

Une structure de façade entièrement en matière plastique ne permettant pas de répondre aux exigences de sécurité des essais de collision ("crash tests"), il est nécessaire d'associer pour la structure de la façade avant des éléments en matière plastique (pour la légèreté et le faible coût de revient) et des éléments métalliques (pour la tenue mécanique). La technique actuellement employée consiste à emboutir une tôle métallique pour former un profilé qui est ensuite rapporté sur un support plastique par vissage ou rivetage de douilles de fixation.

L'un des inconvénients de cette technique est une augmentation du poids de la façade avant, du fait de la double épaisseur métal + plastique au niveau du profilé de renfort métallique.

Le document EP-A-0 658 470 décrit, par ailleurs, une façade selon le préambule de la revendication 1.

Toutefois, dans le document, l'assemblage du profilé de renfort n'est pas adapté à la fixation d'un profilé sur le bord d'un cadre support.

L'un des buts de l'invention est de pallier cet inconvénient, en proposant une structure de façade avant à la fois allégée et renforcée, et qui de plus puisse être réalisée selon un processus le plus simple et économique possible.

Pour cela, la façade de l'invention présente les caractéristiques définies à la revendication 1.

Selon diverses caractéristiques subsidiaires avantageuses :
- le profilé est un profilé à section ouverte présentant une section en forme générale de U ;
- les éléments coopérants comprennent des becs formés sur la traverse, ces becs étant aptes à bloquer le profilé sur la traverse en coopérant avec un rebord longitudinal, rabattu par sertissage vers l'intérieur en direction des becs, de l'une des branches du U du profilé ;
- les moyens d'emboîtement comprennent des épaulements formés sur la traverse, ces épaulements étant aptes à guider le profilé lors de son emboîtement sur la traverse en coopérant avec un rebord longitudinal, rabattu vers l'extérieur en direction de l'épaulement, de l'une des branches du U du profilé ;
- la traverse coopère avec le profilé par des nervures verticales formées sur cette traverse, ces nervures ayant un contour extérieur homologue du contour intérieur du profilé ;
- la façade comporte également un jambage central métallique vertical, solidaire de la traverse et pourvu de moyens de fixation à une serrure de capot, et ce jambage est réuni au profilé à l'endroit des moyens de fixation du jambage à la serrure de capot, le jambage étant de préférence réuni au profilé par l'autre desdites branches du U ;
- le profilé est formé d'une tôle découpée et emboutie ;
- la traverse et/ou le profilé sont aptes à recevoir un faisceau de câbles électriques et/ou un câble de commande mécanique d'une serrure de capot.

D'autres caractéristiques et avantages de l'invention ressortiront de la description détaillée d'un exemple de réalisation ci-dessous, faite en référence aux dessins annexés.

La figure 1 montre en perspective frontale une façade avant selon l'invention.

La figure 2 est une coupe par un plan vertical selon la ligne II-II de la figure 1.

La figure 3 est une vue agrandie du détail repéré III sur la figure 1.

Sur les figures, la référence 10 désigne de façon générale la façade avant selon l'invention, qui comprend essentiellement un cadre 12 en matière plastique, comportant notamment des montants verticaux 14 et un élément transversal ou traverse 16 réunissant ces montants en partie supérieure.

Le cadre 12 est réalisé en une matière plastique appropriée, thermodurcissable ou thermoplastique, par exemple un polyamide armé de fibres de verre (ce choix n'étant bien entendu aucunement limitatif) moulé, par exemple, par injection sous pression.

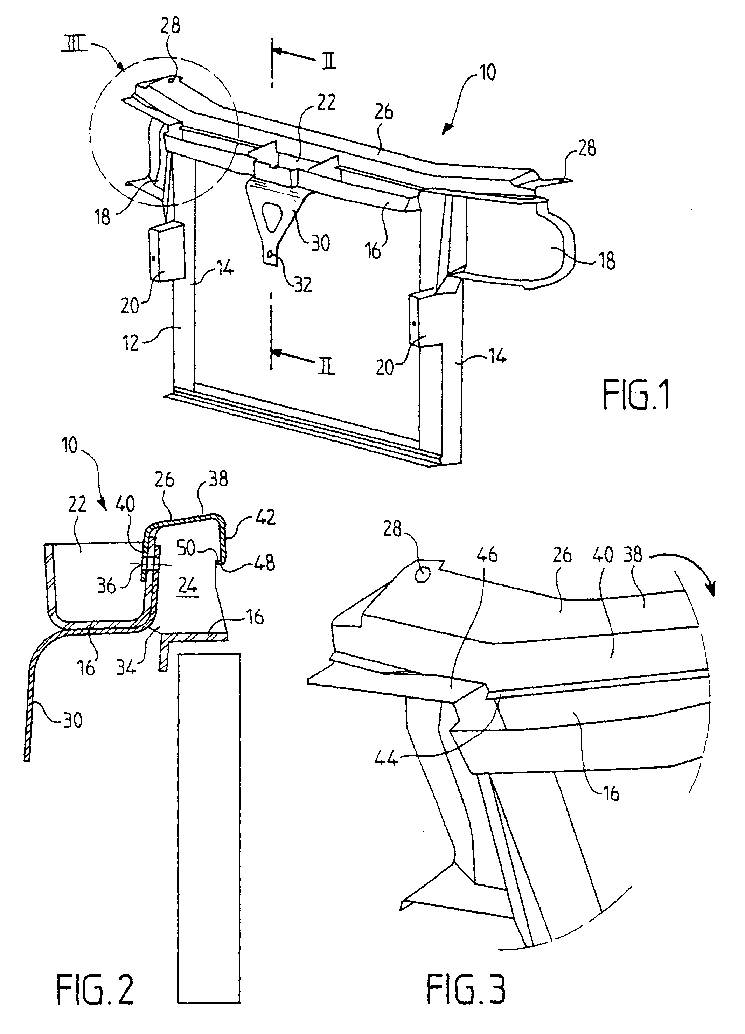

Ce cadre 12 comporte, de manière en elle-même connue, des parties de structure telles que 18 aptes à recevoir des blocs optiques ou telles que 20 pour la fixation à la poutre du bouclier ou du pare-chocs. La traverse 16 comporte un logement 22 pour une serrure de capot, ainsi que des éléments raidisseurs tels que des nervures 24 (figure 2) orientées perpendiculairement à la direction de la traverse 16.

La façade 10 comporte également un profilé métallique transversal 26 s'étendant sur la longueur de la traverse 16 du cadre en matière plastique et pourvu à ses extrémités de trous 28 de fixation à des longerons ou à des ailes du véhicule, de manière à garantir la rigidité mécanique du châssis de ce dernier. Ce profilé peut par exemple être réalisé par emboutissage d'une tôle, de manière à lui donner le profil voulu.

La façade comporte également un autre élément métallique, à savoir un jambage central 30 comportant à son extrémité libre inférieure un trou 32 de fixation à la poutre du bouclier ou du pare-chocs du véhicule. A son autre extrémité, le jambage 30 est pourvu de moyens (non représentés) destinés à coopérer avec la serrure du capot du véhicule qui sera placée dans le logement 22. Le jambage 30 assurera ainsi, capot fermé, la liaison mécanique entre le capot et le bouclier pour contribuer à la rigidification d'ensemble de la structure du véhicule.

Ce jambage 30 est monté sur le cadre 12 en le faisant passer dans un trou 34 (figure 2) prévu à cet effet, de manière à l'appliquer contre la partie antérieure du profilé 16, auquel il sera fixé en 36, ainsi qu'à la serrure de capot, par tout moyen connu approprié.

De façon caractéristique de l'invention, le profilé 26 est un profilé en forme de U comportant (figure 2) une partie centrale 38 et deux ailes 40 et 42. Ce profilé est monté sur la traverse 16 par simple emboîtement sur cette dernière. Pour ce faire, un rebord saillant 44, dirigé vers l'avant, du profilé 26 (figure 3) est inséré sous un épaulement 46 formé à cet effet sur la traverse 16. Puis le profilé 26 est rabattu, dans le sens de la flèche de la figure 3, sur la traverse 16 jusqu'à venir en appui contre la tranche supérieure des nervures 24. Le profilé est maintenu dans cette position, illustrée figure 2, au moyen d'un rebord longitudinal 48 qui est rabattu par sertissage de manière à être tourné vers l'intérieur. Ce rebord longitudinal 48 vient coopérer avec les becs saillants homologues 50 formés sur les nervures 24.

La fixation du profilé 26 sur la traverse 16 peut être parachevée par la fixation en 36, qui solidarise ainsi ponctuellement, dans l'ordre : la serrure de capot, le profilé 26, la partie antérieure de la traverse 16 et la partie supérieure du jambage 30, cette fixation permettant de lier toutes ces pièces entre elles.

On notera que, du fait que le profilé 26 repose sur la tranche supérieure des nervures 24, l'épaisseur de la façade en cet endroit est uniquement constituée par l'épaisseur du profilé 26.

Ainsi, à la différence de l'art antérieur où l'on doublait l'épaisseur du plastique par celle du profilé métallique, la suppression de l'épaisseur de matière plastique en cet endroit permet d'augmenter l'accessibilité à la traverse 16 avant le montage du profilé 26.

On peut notamment intégrer ainsi plus aisément un faisceau électrique ou un câble de commande de la serrure du capot, ou d'autres composants encore.

## Revendications

1. Façade avant composite métal/plastique (10) pour véhicule automobile, comprenant un cadre (12) en matière plastique renforcé par un profilé métallique (26) s'étendant sur toute la largeur de la façade et pourvu de moyens (28) de fixation à des éléments de structure du véhicule, le profilé (26) étant rapporté et emboîté en force sur une traverse (16) du cadre (12) en matière plastique, le profilé (26) et la traverse (16) comportant des moyens d'emboîtement mutuel (44, 46),
façade **caractérisée en ce que** le profilé est un profilé supérieur et **en ce que** des éléments coopérants (48, 50), distincts des moyens d'emboîtement, permettent de sertir le profilé sur la traverse.

2. Façade selon la revendication 1, **caractérisée en ce que** le profilé (26) est un profilé à section ouverte présentant une section en forme générale de U (38, 40, 42).

3. Façade selon la revendication 2, **caractérisée en ce que** les éléments coopérants comprennent des becs (50) formés sur la traverse (16), ces becs (50) étant aptes à bloquer le profilé (26) sur la traverse (16) en coopérant avec un rebord longitudinal (48), rabattu par sertissage vers l'intérieur en direction des becs (50), de l'une (42) des branches du U du profilé (26).

4. Façade selon l'une des revendications 1 à 3, **caractérisée en ce que** les moyens d'emboîtement comprennent des épaulements (46) formés sur la traverse (16), ces épaulements (46) étant aptes à guider le profilé (26) lors de son emboîtement sur la traverse (16) en coopérant avec un rebord longitudinal (44), rabattu vers l'extérieur en direction de l'épaulement, de l'une (40) des branches du U du profilé (26).

5. Façade selon la revendication 2, **caractérisée en ce que** la traverse (16) coopère avec le profilé (26) par des nervures verticales (24) formées sur cette traverse (16), ces nervures (24) ayant un contour extérieur homologue du contour intérieur du profilé (26).

6. Façade selon l'une des revendications 1 à 5, **caractérisée en ce qu'**elle comporte également un jambage central métallique vertical (30), solidaire de la traverse (16) et pourvu de moyens (36) de fixation à une serrure de capot, et **en ce que** ce jambage (30) est réuni au profilé (26) à l'endroit des moyens (36) de fixation du jambage (30) à la serrure de capot.

7. Façade selon les revendications 3 et 6 prises en combinaison, **caractérisée en ce que** le jambage (30) est réuni au profilé (26) par l'autre (40) desdites branches du U.

8. Façade selon l'une des revendications 1 à 7, **caractérisée en ce que** le profilé (26) est formé d'une tôle découpée et emboutie.

9. Façade selon l'une des revendications 1 à 8, **caractérisée en ce que** la traverse (16) et/ou le profilé (26) sont aptes à recevoir un faisceau de câbles électriques et/ou un câble de commande mécanique d'une serrure de capot.

## Patentansprüche

1. Vorderseite aus einem Metall/Kunststoff-Verbund (10) für ein Kraftfahrzeug mit einem Kunststoffrahmen (12), der mit einem Metallprofil (26) verstärkt ist, das sich über die ganze Breite der Vorderseite erstreckt und mit Mitteln (28) zur Befestigung an Strukturelementen des Fahrzeugs versehen ist, wobei das Profil (26) an einem Querträger (16) des Kunststoffrahmens (12) angefügt und unter Kraft eingepasst ist, wobei das Profil (26) und der Querträger (16) Mittel zum wechselseitigen Ineinanderpassen (44, 46) umfassen,
**dadurch gekennzeichnet, dass** das Profil ein oberes Profil ist und dass die zusammenwirkenden Elemente (48, 50), die von den Mitteln zum Ineinanderpassen verschieden sind, es gestatten, das Profil an dem Querträger festzuklemmen.

2. Vorderseite nach Anspruch 1, **dadurch gekennzeichnet, dass** das Profil (26) ein Profil mit offenem Querschnitt ist, das im Großen und Ganzen eine U-Form aufweist (38, 40, 42).

3. Vorderseite nach Anspruch 2, **dadurch gekennzeichnet, dass** die zusammenwirkenden Elemente Nasen (50) umfassen, die an dem Querträger (16) ausgebildet sind, wobei diese Nasen (50) in der Lage sind, das Profil (26) an dem Querträger (16) zu arretieren, indem sie mit einem Längsrand (48) von einem (42) der Arme des U's des Profils (26) zusammenwirken, der durch Falzen nach innen in Richtung der Nasen (50) umgeschlagen wird.

4. Vorderseite nach einem der Ansprüche 1 bis 3, **dadurch gekennzeichnet, dass** die Verbundmittel Schultern (46) umfassen, die an dem Querträger (16) ausgebildet sind, wobei diese Schultern (46) in der Lage sind, das Profil (26) bei seinem Verbund auf dem Querträger (16) zu führen, indem sie mit einem Längsrand (44) von einem (40) der Arme des U's des Profils (26) zusammenwirken, der nach außen in Richtung der Schulter umgeschlagen ist.

5. Vorderseite nach Anspruch 2, **dadurch gekennzeichnet, dass** der Querträger (16) mit dem Profil (26) über vertikale Rippen (24) zusammenwirkt, die auf diesem Querträger (16) ausgebildet sind, wobei diese Rippen (24) einen äußeren Umriss aufweisen, der dem inneren Umriss des Profils (26) entspricht.

6. Vorderseite nach einem der Ansprüche 1 bis 5, **dadurch gekennzeichnet, dass** sie ebenso ein metallisches, vertikales Stützglied (30) umfasst, das mit dem Querträger (16) eine Einheit bildet und mit Mitteln (36) zur Befestigung an einem Haubenschloss versehen ist, und dass dieses Stützglied (30) mit dem Profil (26) am Ort der Befestigungsmittel (36) des Stützglieds (30) mit dem Haubenschloss verbunden ist.

7. Vorderseite nach den Ansprüchen 3 und 6, **dadurch gekennzeichnet, dass** das Stützglied (30) über den anderen (40) der Arme des U's mit dem Profil (26) vereinigt ist.

8. Vorderseite nach einem der Ansprüche 1 bis 7, **dadurch gekennzeichnet, dass** das Profil (26) aus einem zugeschnittenen und tiefgezogenen Blech geformt wird.

9. Vorderseite nach einem der Ansprüche 1 bis 8, **dadurch gekennzeichnet, dass** der Querträger (16) und/oder das Profil (26) in der Lage sind, ein elektrisches Kabelbündel und/oder ein mechanisches Betätigungskabel eines Haubenschlosses aufzunehmen.

## Claims

1. Metal/plastic composite front panel (10) for a motor vehicle, comprising a surround (12) made of plastic reinforced with a metal section piece (26) running across the entire width of the panel and provided with means (28) of attachment to structural elements of the vehicle, the section piece (26) being attached and force-fitted onto a crossmember (16) of the plastic surround (12), the section piece (26) and the crossmember (16) comprising nesting-together means (44, 46), the panel being **characterized in that** the section piece is an upper section piece and **in that** collaborating elements (48, 50) distinct from the nesting-together means allow the section piece to be crimped onto the crossmember.

2. Panel according to Claim 1, **characterized in that** the section piece (26) is a section piece of open cross section having a cross section of overall U-shape (38, 40, 42).

3. Panel according to Claim 2, **characterized in that** the collaborating elements comprise nibs (50) formed on the crossmember (16), these nibs (50) being able to immobilize the section piece (26) on the crossmember (16) by collaborating with a longitudinal lip (48), folded over by crimping inwards towards the nibs (50), of one (42) of the branches of the U of the section piece (26).

4. Panel according to one of Claims 1 to 3, **characterized in that** the nesting-together means comprise shoulders (46) formed on the crossmember (16), these shoulders (46) being able to guide the section piece (26) as it is nested onto the crossmember (16) by collaborating with a longitudinal lip (44) folded over outwards towards the shoulder, of one (40) of the branches of the U of the section piece (26).

5. Panel according to Claim 2, **characterized in that** the crossmember (16) collaborates with the section piece (26) via vertical ribs (24) formed on this crossmember (16), these ribs (24) having an external contour similar to the internal contour of the section piece (26).

6. Panel according to one of Claims 1 to 5, **characterized in that** it also comprises a vertical metal central strut (30) secured to the crossmember (16) and provided with means (36) of attachment to a bonnet catch, and **in that** this strut (30) is connected to the section piece (26) at the location of the means (36) of attachment of the strut (30) to the bonnet catch.

7. Panel according to Claims 3 and 6 taken in combination, **characterized in that** the strut (30) is connected to the section piece (26) via the other (40) of the said branches of the U.

8. Panel according to one of Claims 1 to 7, **characterized in that** the section piece (26) is formed of cut and pressed sheet metal.

9. Panel according to one of Claims 1 to 8, **characterized in that** the crossmember (16) and/or the section piece (26) are able to accommodate an electric wiring harness and/or a cable for mechanically operating a bonnet catch.
